# EUROPÄISCHE PATENTSCHRIFT

(11) **EP 1 425 640 B1**
(45) Veröffentlichungstag und Bekanntmachung des Hinweises auf die Patenterteilung: **15.11.2006**
(21) Anmeldenummer: 02772284.2
(22) Anmeldetag: 10.09.2002
(51) Int. Cl.: G05B 19/406

(54) **ÜBERWASCHENGSSYSTEM SOWIE VERFAHREN ZUR PROZESSBEGLEITENDEN ÜBERWACHUNG VON WERKZEUGMASCHINEN-KOMPONENTEN**
MONITORING SYSTEM AND A METHOD FOR THE IN-PROCESS MONITORING OF MACHINE-TOOL COMPONENTS
SYSTEME ET PROCEDE SERVANT A SURVEILLER DES COMPOSANTS DE MACHINES-OUTILS, LORS DU DEROULEMENT DE PROCESSUS

(30) Priorität: 10.09.2001 DE 10144459
(43) Veröffentlichungstag der Anmeldung: 09.06.2004
(73) Patentinhaber: Kluft, Werner, D-52078 Aachen (DE)
(72) Erfinder: Kluft, Werner, D-52078 Aachen (DE)
(74) Vertreter: Dallmeyer, Georg
(86) Internationale Anmeldenummer: PCT/EP2002/010121
(87) Internationale Veröffentlichungsnummer: WO 2003/023327

(56) Entgegenhaltungen:
- EP-A- 0 321 108
- EP-A- 0 762 248
- US-A- 6 138 056

## Beschreibung

Die Erfindung bezieht sich auf ein Überwachungssystem, sowie auf ein Verfahren mit einem Überwachungssystem, welches standardmäßig zur prozessbegleitenden Überwachung von Werkzeugen, Werkstücken oder Bearbeitungsprozessen in spanabhebenden Werkzeugmaschinen dient.

Überwachungsbedürftig sind Komponenten von Werkzeugmaschinen, die einem Verschleiß unterliegen oder die aufgrund von Maschinenkollisionen, Maschinenüberlastungen oder unwuchtigen Werkzeugen bzw. Werkstücken Schaden nehmen können. Solche Werkzeugmaschinenkomponenten sind im wesentlichen solche, die Bewegungen in den Werkzeugmaschinen ausführen. Sie beschränken sich deshalb im wesentlichen auf Vorschubschlitten, Werkzeug- und Werkstückspindeln, aber auch auf Aggregate zum weiteren Betrieb einer spanabhebenden Werkzeugmaschine.

Bei Vorhandensein eines Überwachungssystems zur prozessbegleitenden Überwachung von Werkzeugen, Werkstücken oder Bearbeitungsprozessen wird es durch das erfindungsgemäße Verfahren ermöglicht, für die Überwachung bzw. Überprüfung von Vorschubschlitten und Werkzeug- oder Werkstückspindeln separate Überwachungseinrichtungen hierfür einzusparen; wodurch sich ein bedeutendes Kostenersparnispotential ergibt, weil Hardware, Software, Bedienteil und Schnittstelle zur Maschinensteuerung nicht doppelt auszuführen sind.

Es sind mehrere Überwachungsgeräte zur Überwachung von Schwingungen an rotierenden Maschinen und Maschinenkomponenten bekannt. Diese sind vorrangig für die Erkennung von Vibrationen und Unwuchten an Motoren und Getrieben, teilweise aber auch zur Erkennung von Unwuchten an Werkzeugmaschinenspindein geeignet. Einige sind auch dazu geeignet, Lagerschäden aufgrund ihrer Vibrationsmessungen festzustellen (zum Beispiel der Vibration Monitor VIMO 100 der PROMETEC GmbH, Aachen, siehe Anlage "Vibration Monitor VIMO 100", Firma Prometec, Aachen, und "Modulares Prozess Monitor System PROMOS, Firma Prometec, Aachen). Der Inhalt dieser Druckschriften wird durch Bezugnahme in die vorliegende Offenbarung inkorporiert.

Außerdem ist bekannt, dass an Werkzeugmaschinen zur Überprüfung von Lagerschäden Schwingungssensoren an den Spindelgehäusen in Lagemähe angebracht werden und die Kabel der Sensoren zu zugänglichen Steckern an der Werkzeugmaschinenfront geführt werden. Das Instandhaltungspersonal nutzt diese Stecker, um von Zeit zu Zeit mit Analysegeräten die Signale auf Lagerschäden zu analysieren. Dazu werden die Signale mit den Analysegeräten aufgezeichnet und später offline analysiert. Eine In-Prozess-Überwachung findet dabei nicht statt.

Aus der US 6,138,056 ist ein System und ein Verfahren zur Wartung und Reparatur einer CNC-Maschine bekannt, bei dem zur Überwachung der Maschinenachsen Laufweg- und Laufzeitendaten ermittelt werden, um den Wartungs- und Reparaturzeitpunkt der Maschine zu ermitteln.

Überwachungssysteme zur prozessbegleitenden Überwachung von Werkzeugen, Werkstücken oder Bearbeitungsprozessen in spanabhebenden Werkzeugmaschinen zum Drehen, Bohren oder Fräsen haben das Ziel, mindestens einen der Zustände Werkzeugbruch, Werkzeugausbruch, Werkzeugverschleiß, Werkzeug zu Werkstückkontakt, Rattern oder Maschinenkollisionen in-Prozess zu erkennen und insbesondere bei Werkzeugbruch oder Maschinenkollision die Maschinenantriebe schnellstmöglich still zu setzen, um Folgeschäden zu vermeiden. Ein derartiges System ist beispielsweise aus der EP-A-0 321 108 bekannt.

Solche In-Prozess-Überwachungssysteme verfügen bereits über eine elektrische Schnittstelle zwischen dem Überwachungssystem und der Maschinensteuerung, um in von der Maschinensteuerung vorgegebenen Überwachungsabschnitten die Signalverläufe der Sensoren in-Prozess zu überwachen und im Falle der Erkennung einer der o.g. Zustände die Maschine über dieselbe Schnittstelle still zu setzen. Die Schnittstellen zwischen der Werkzeugmaschinensteuerung und dem Überwachungssystem waren bisher im wesentlichen in Form von parallelen Ein- und Ausgangssignalen zur SPS-Steuerung vorhanden. Eine solche parallele Schnittstelle zwischen der SPS und einem werkzeug- und Prozessüberwachungssystem besteht zum Beispiel nach dem BAPSI-Standard, der es auch bereits erlaubt, Datenwörter als Werkzeugcode bzw. Schnittcode aus dem NC-Programm an das Überwachungssystem zu übertragen. Erst in jüngster Zeit werden von den Steuerungsherstellern zunehmend Feldbusschnittstellen neben oder als Ersatz für diese parallelen Schnittstellen angeboten, die es ermöglichen, einen umfassenderen Informationsaustausch zwischen der Maschinensteuerung, bestehend aus der speicherprogrammierbaren Steuerung (SPS) bzw. der NC-Steuerung, auszutauschen.

Aus der EP-A-0762248 ist ein Verfahren bekannt, mit dem auf Basis von Messdaten von mindestens einem Vibrationssensor eine post-process Überprüfung stattfindet, um fehlerhafte Zustände an Werkzeugmaschinenkomponenten nachträglich zu charakterisieren.

Der Erfindung liegt die Aufgabe zugrunde, ein Überwachungssystem und ein Verfahren zur prozessbegleitenden Überwachung von WerkzeugmaschinenKomponenten zu schaffen, die ohne nennenswerte Änderungen an der Hardware oder Software des Überwachungssystems Komponenten von Werkzeugmaschinen überwachen oder überprüfen können.

Zur Lösung der Aufgabe dienen die Merkmale der Ansprüche 1 und 6.

Erfindungsgemäß wird die Aufgabe zur Verschmelzung eines Überwachungssystems zur prozessbegleitenden Überwachung von Werkzeugen, Werkstücken oder Prozessen in spanabhebenden Werkzeugmaschinen zum Drehen, Bohren oder Fräsen für mindestens die Zustände Werkzeugbruch, Werkzeugausbruch, Werkzeugverschleiß, Werkzeug-zu-Werkstück-Kontakt und Rattern mit einem Überwachungssystem für Werkzeugmaschinenkomponenten zur Erkennung, Überwachung oder Überprüfung fehlerhafter Zustände an Komponenten von Werkzeugmaschinen wie zum Beispiel Schäden bzw. Verschleiß an den Vorschubschlitten, an den Werkzeug- oder Werkstückspindein bzw. die Unwucht an Werkzeug- oder Werkstückspindeln bzw. an Bohr- oder Fräswerkzeugen dadurch gelöst, dass beide Aufgaben mit ein und derselben Überwachungshardware mit entsprechender Auswertesoftware und ein und derselben bidirektionalen Schnittstelle, bevorzugt einer Feldbusschnittstelle, zwischen der Überwachungshardware und der Maschinensteuerung realisiert werden.

Es werden lediglich zusätzliche Sensoren an den WerkzeugmaschinenKomponenten, den Vorschubschlitten bzw. den Werkzeug- oder Werkstückspindeln benutzt, falls solche für die ursächliche prozessbegleitende Überwachungsaufgabe an Werkzeugen, Werkstücken oder Bearbeitungsprozessen nicht erforderlich waren.

Die Systeme zur In-Prozess-Lager- bzw. Schwingungs- oder Unwuchtüberwachung sind neben einem Werkzeug- und Prozessüberwachungssystem zusätzlich an denselben Feldbus angeschlossen. Ein entsprechendes Überwachungssystem zur Spindel- bzw. Lager-Unwuchtüberwachung, welches eine serielle Schnittstelle beinhaltet, ist bisher nicht bekannt geworden.

In Überwachungssystemen zur prozessbegleitenden Überwachung von Werkzeugen, Werkstücken oder Bearbeitungsprozessen für spanabhebende Werkzeugmaschinen zum Drehen, Bohren und Fräsen sind heute standardmäßig alle Arten von Überwachungsschwellen und Überwachungs- bzw. Auswertestrategien bekannter und beliebiger Art wie statische Schwellen, dynamische Schwellen, Schwellen von Signalmusterkurven, Arbeitswertschwellen etc. vorhanden, wie ebendiese auch für die Überwachung von fehlerhaften Zuständen an Komponenten von Werkzeugmaschinen erforderlich sind.

Die Erfindung löst das Problem, wann und wie die Maschinensteuerung als steuernder Baustein für die Überwachungsabschnitte zur Erkennung der fehlerhaften Zustände an Komponenten von Werkzeugmaschinen zu agieren hat und ob sie bzw. wie sie ggf. zur Erzeugung entsprechender Signale an den Sensoren der Werkzeugmaschinen-Komponente die Vorschubschlitten bzw. die Werkzeug- oder Werkstückspindel bewegt bzw. verfährt oder dreht.

Der Hauptanspruch beansprucht, dass ein prozessbegleitendes Überwachungssystem zur Überwachung von Werkzeugen, Werkstücken oder Bearbeitungsprozessen in spanabhebenden Werkzeugmaschinen zum Drehen, Bohren und Fräsen auch fehlerhafte Zustände an Komponenten von Werkzeugmaschinen erkennen, überwachen oder zielgerichtet überprüfen kann.

Zusätzliche Sensoren können an den Komponenten von Werkzeugmaschinen vorhanden sein, auf die das Überwachungssystem automatisch in Abhängigkeit von dem durch die Steuerung angewählten Überwachungsabschnitt umschalten kann.

Die Verfahrensansprüche geben an, wie das Überwachungssystem Schäden bzw. Verschleiß an den Vorschubschlitten erkennen, überwachen oder zielgerichtet überprüfen kann.

Die Ansprüche 13-25 beschreiben und beanspruchen, wie das Überwachungssystem Schäden bzw. Verschleiß an Werkzeug- oder Werkstückspindein erkennen, überwachen oder zielgerichtet überprüfen kann.

Die Ansprüche 26-32 beanspruchen und beschreiben, wie das Überwachungssystem die Unwucht an Werkzeug- oder Werkstückspindeln erkennen, überwachen oder zielgerichtet überprüfen kann.

Die Ansprüche 33-35 beanspruchen und beschreiben, wie das Überwachungssystem die Unwucht an Bohr- oder Fräswerkzeugen erkennen, überwachen oder zielgerichtet überprüfen kann.

Die Ansprüche 36-42 beanspruchen und beschreiben, wie das Überwachungssystem Schäden bzw. Verschleiß an weiteren zum Betrieb der Werkzeugmaschine benötigten Aggregaten erkennen, überwachen oder zielgerichtet überprüfen kann.

## Patentansprüche

1. Überwachungssystem zur prozessbegleitenden Überwachung von Werkzeugen, Werkstücken oder Bearbeitungsprozessen in spanabhebenden Werkzeugmaschinen zum Drehen, Bohren oder Fräsen mit dem Ziel der Erkennung von mindestens einem der Zustände Werkzeugbruch, Werkzeugausbruch, Werkzeugverschleiß, Werkzeug-zu-Werkstückkontakt mit oder ohne Werkstückmaßkontrolle, Maschinenkollisionen oder Prozessentartungen wie Rattern, werkzeug-, werkstück- oder schnittspezifische Überlast oder Unterlast, bestehend aus
- mindestens einem Sensor zur Erfassung von Messsignalen aus dem Bearbeitungsprozess, die mindestens einer Kraftrichtung, einer Kraftresultierenden, einem Druck, einem Drehmoment, einer Motorleistung, einem Motorstrom, einer Schwingung, einer Beschleunigung, einem Körperschallgeräusch oder einer Abstandsänderung zwischen zwei Maschinenbauteilen gleichzusetzen sind,
- mindestens einer Überwachungshardware mit Software zur Speicherung und zum Vergleich von Überwachungsdaten in Werkzeug- oder schnittspezifischen Überwachungsabschnitten, die von der Maschinensteuerung durch das NC- und/oder SPS-Programm über eine Schnittstelle vorgegebenen werden und in denen ein Vergleich der Messsignale oder Messsignalkurven von mindestens einem Sensor mit gespeicherten Überwachungsschwellen durch Überwachungs- und Auswertestrategien erfolgt, derart, dass bei Messsignalen, die die Überwachungsschwellen verletzen, eine entsprechende Meldung an die Maschinensteuerung zur entsprechenden Reaktion der Maschine gegeben wird,
- mindestens einer bidirektionalen Schnittstelle, vorzugsweise einer Feldbusschnittstelle, zwischen der Überwachungshardware und der Maschinensteuerung, wobei die bidirektionale Schnittstelle einen Datenaustausch zwischen der Maschine und dem Überwachungssystem vornimmt und insbesondere dazu geeignet ist, die werkzeug- oder schnittspezifischen Überwachungsabschnitte, in Form von Datenworten als unterschiedliche Nummern oder Befehle, vorzugsweise als Werkzeugcode, Werkzeugkorrektur- oder Platznummern, Schnittcode, H- oder M-Befehle, aus dem NC- bzw. SPS-Programm an das Überwachungssystem zwecks Aufteilung der Überwachung in verschiedene Überwachungsabschnitte zu leiten,
- und vorzugsweise einer Bedienungshardware mit Software zur Bedienung und/oder Parametrierung des Überwachungssystems und/oder zur Visualisierung der Messsignale,
**dadurch gekennzeichnet,**
**dass** das Überwachungssystem In anderen Überwachungsabschnitten, die zu Zeiten, in denen kein Bearbeitungsprozess stattfindet, von der Maschinensteuerung vorgegeben werden, fehlerhafte Zustände an Komponenten von Werkzeugmaschinen, vorzugsweise Schäden oder Verschleiß an den Vorschubschlitten oder an den Werkzeug- oder Werkstückspindeln erkennt, überwacht oder zielgerichtet überprüft.

2. Überwachungssystem nach Anspruch 1, **dadurch gekennzeichnet, dass** das Überwachungssystem für jede Überwachungsaufgabe an den Komponenten von Werkzeugmaschinen einen oder mehrere zusätzliche Sensoren aufweist, auf die das Überwachungssystem automatisch umschaltet, wenn der entsprechende Überwachungsabschnitt für die Überwachungsaufgabe an Komponenten von Werkzeugmaschinen von der Maschinensteuerung aufgerufen wird.

3. Überwachungssystem nach Anspruch 1 und 2, **dadurch gekennzeichnet, dass** zur Überwachung von Schäden oder Verschleiß an den Vorschubschlitten
- Kraftsensoren zur Erfassung der Vorschubkraft in Schlittenbewegungsrichtung an einem der Vorschubspindellagerböcke,
- Strom- oder Leistungssensoren an den Vorschubspindelmotoren oder
- für eine Überwachung von Geräuschen oder Schwingungen an Vorschubschlitten ein oder mehrere Körperschallsensoren und/oder Schwingungssensoren auf den Schlitten, den Führungsbahnen und/oder den spindellagerböcken
angeordnet sind.

4. Überwachungssystem nach einem der Ansprüche 1 bis 3, **dadurch gekennzeichnet, dass** die Überwachung von Schäden oder Verschleiß an den Vorschubschlitten durch Auslesen der Messwerte der vorhandenen Stromsensoren an den Vorschubantrieben aus der Maschinensteuerung über die bidirektionale Schnittstelle erfolgt.

5. Überwachungssystem nach Anspruch 1 und 4, **dadurch gekennzeichnet, dass** zur Überwachung von Schäden bzw. Verschleiß an sonstigen motorbetriebenen Vorrichtungen der Maschine, wie Hydraulikaggregat, Kühlschmiermittelpumpe, Antrieb der Schutztür etc., im folgenden Aggregate genannt, diese über Strom- oder Leistungssensoren an den Antriebsmotoren oder, für eine Überwachung von Geräuschen oder Schwingungen an den Aggregaten diese über einen oder mehrere Körperschallsensoren und/oder Schwingungssensoren verfügen.

6. Verfahren zur prozessbegleitenden Überwachung von Werkzeugmaschinen-Komponenten mit einem Überwachungssystem nach einem der Ansprüche 1 bis 5 in dem
- Messsignale aus dem Bearbeitungsprozess, die mindestens einer Kraftrichtung, einer Kraftresultierenden, einem Druck, einem Drehmoment, einer Motorleistung, einem Motorstrom, einer Schwingung, einer Beschleunigung, einem Körperschallgeräusch oder einer Abstandsänderung zwischen zwei Maschinenbauteilen gleichzusetzen sind, von mindestens einem Sensor erfasst werden,
- Überwachungsdaten in werkzeug- oder schnittspezifischen Überwachungsabschnitten von mindestens einer Überwachungshardware mit Software gespeichert und verglichen werden, wobei die Überwachungsabschnitte von der Maschinensteuerung durch das NC- und/oder SPS-Programm über eine Schnittstelle vorgegebenen werden und wobei in den Überwachungsabschnitten ein Vergleich der Messsignale oder Messsignalkurven von mindestens einem Sensor mit gespeicherten Überwachungsschwellen durch Überwachungs- und Auswertestrategien erfolgt, derart, dass bei Messsignalen, die die Überwachungsschwellen verletzen, eine entsprechende Meldung an die Maschinensteuerung zur entsprechenden Reaktion der Maschine gegeben wird,
- ein Datenaustausch zwischen der Maschine und dem Überwachungssystem über eine bidirektionale Schnittstelle vorgenommen wird wobei die Werkzeug- oder schnittspezifischen Überwachungsabschnitte in Form von Datenworten als unterschiedliche Nummern oder Befehle, vorzugsweise als Werkzeugcode, Werkzeugkorrektur- oder Platznummern, Schnittcode oder H- oder M-Befehle, aus dem NC- bzw. SPS-Programm an das Überwachungssystem zwecks Aufteilung der Überwachung in verschiedene Überwachungsabschnitte geleitet werden,
**dadurch gekennzeichnet,**
**dass** in anderen Überwachungsabschnitten, die zu Zeiten in denen kein Bearbeitungsprozess stattfindet von der Maschinensteuerung vorgegebenen, fehlerhafte Zustände an Komponenten von Werkzeugmaschinen, vorzugsweise Schäden oder Verschleiß an den Vorschubschlitten oder an den Werkzeug- oder Werkstückspindeln von dem Überwachungssystem erkannt, überwacht oder zielgerichtet überprüft werden.

7. Verfahren zur prozessbegleitenden Überwachung nach Anspruch 6, **dadurch gekennzeichnet, dass** die Maschinensteuerung in der Zeit, in der sie den Überwachungsabschnitt zur Überprüfung von Vorschubschlitten an das Überwachungssystem vorgibt, auch den oder die Vorschubschlitten über die zu überprüfenden Verfahrbereiche, vorzugsweise über die gesamten Verfahrbereiche, bewegt, ohne dabei einen Bearbeitungsprozess auszuführen, und sie diese Bewegungen über einen NC-Unterprogrammteil ausführen kann, der zusammen mit dem Datenwort für den Überwachungsabschnitt aufgerufen wird.

8. Verfahren nach Anspruch 7, **dadurch gekennzeichnet, dass** die Maschinensteuerung den Überwachungsabschnitt zur Überprüfung von Vorschubschlitten dann ausführt, wenn sich kein Werkstück in der Maschine befindet, so dass ohne Kollisionsgefahr und ohne Bearbeitungsprozess die gesamten Verfahrbereiche bewegt bzw. hin und her bewegt werden können.

9. Verfahren nach Anspruch 7, **dadurch gekennzeichnet, dass** insbesondere in der Massenfertigung von Werkstücken die Maschinensteuerung für den Überwachungsabschnitt zur Überprüfung von Vorschubschlitten das normale NC-Programm zur Bearbeitung dieses Werkstückes mit ihren Vorschubschlitten durchfährt, jedoch dazu kein Werkstück in die Maschine einlegt und anstelle der Überwachungsabschnitte zur Überwachung von Werkzeugen, Werkstücken oder Bearbeitungsprozessen in diesem Fall den Überwachungsabschnitt zur Überwachung von Vorschubschlitten an das Überwachungssystem leitet.

10. Verfahren nach Anspruch 7 bis 9, **dadurch gekennzeichnet, dass** während des Aufrufens des Überwachungsabschnittes die Bewegung des Vorschubschlittens stets identisch ist und der Überwachungszyklus in regelmäßigen zeitlichen Abständen, durch die Maschinensteuerung bei identischen Betriebsbedingungen der Werkzeugmaschine wiederholt ausgelöst wird.

11. Verfahren nach Anspruch 7 bis 10, **dadurch gekennzeichnet, dass** der Überwachungsabschnitt zur zielgerichteten Überprüfung von Vorschubschlitten von der Maschinensteuerung praktisch unbegrenzt oft innerhalb der Lebensdauer einer Werkzeugmaschine vorgegeben werden kann.

12. Verfahren nach Anspruch 11, **dadurch gekennzeichnet, dass** der zeitliche Abstand zwischen jeweils zwei gleichen Überwachungsabschnitten zur zielgerichteten Überprüfung von Vorschubschlitten von der Maschinensteuerung so vorgegeben ist, wie eine gerade noch wahrnehmbare, verschleißbedingte Änderung an den Führungsbahnen zeitlich zu erwarten währe.

13. Verfahren nach Anspruch 7 bis 12, **dadurch gekennzeichnet, dass** bei neuen bzw. einwandfreien, unverschlissenen Vorschubschlitten ein Teach-In-Überwachungsabschnitt durchgeführt wird, bei dem die Messsignale bzw. Messsignalkurven der Sensoren im Überwachungssystem abgespeichert und in Relation dazu die Schaltschwellen bzw. Schaltschwellenkurven für die maximal zulässigen Abweichungen der Sensorsignale für die künftigen Überwachungsabschnitte bis zum Ende der Lebensdauer der Vorschubschlitten der Werkzeugmaschine festgelegt werden.

14. Verfahren nach Anspruch 7 bis 13, **dadurch gekennzeichnet, dass** die Messsignale bzw. Messsignalkurven der Sensoren aus den aufeinander folgenden, gleichen Überwachungsabschnitten zur Überprüfung der Vorschubschlitten im Überwachungssystem abgespeichert und jederzeit ausgelesen werden können.

15. Verfahren nach Anspruch 7 bis 14, **dadurch gekennzeichnet**, das nach einer Maschinenkollision oder einem Werkzeugbruch, wie es das Überwachungssystem standardmäßig feststehen kann und an die Maschinensteuerung meldet, die Maschinensteuerung nach Bereinigung der Kollisions- oder Bruchsituation mit Beginn der regulären Bearbeitung im Automatikbetrieb zunächst einen im Hinblick auf die sonst übliche zeitliche Abfolge einen außerplanmäßigen Überwachungsabschnitt zur zielgerichteten Überprüfung der Vorschubschlitten ausführt und dass das Überwachungssystem die Messsignale bzw. Messsignalkurven der Sensoren in diesem Fall separat abspeichert um eventuelle Schäden durch die Kollision oder den Werkzeugbruch an den Vorschubschlitten zu dokumentieren.

16. Verfahren nach Anspruch 6, **dadurch gekennzeichnet, dass** zur Überwachung von Schäden bzw. Verschleiß an Werkzeug- oder Werkstückspindeln, vorrangig an deren Lagern, sowie zur Überprüfung von unzulässiger Unwucht an Werkzeug- oder Werkstückspindeln diese über Körperschallsensoren zur Erfassung des Laufgeräusches bzw, über Schwingungssensoren zur Erfassung von Spindelschwingungen bzw. über Abstandssensoren zur Erfassung von Verlagerungen zwischen zwei Spindelbauteilen, bevorzugt von Rotor und Stator zueinander bzw. über Temperatursensoren zur Erfassung verlustleistungsbedingter Temperaturerhöhungen jeweils im unmittelbaren Bereich der Lagerungen bzw. über Strom- oder Leistungssensoren am Werkzeug- oder Werkstückspindelmotor, auch durch Auslesen der Messwerte der vorhandenen Stromsensoren an den Spindelantrieben aus der Maschinensteuerung über die bidirektionale Schnittstelle zur Erfassung verlustleistungsbedingter Strom- oder Leistungserhöhungen verfügen.

17. Verfahren nach Anspruch 16, **dadurch gekennzeichnet, dass** die Maschinensteuerung in der Zeit in der sie den Überwachungsabschnitt zur Überprüfung von Werkzeug- oder Werkstückspindeln an das Überwachungssystem vorgibt, auch die Spindeln in die zu überprüfenden Drehzahlbereiche steuert, vorzugsweise diese über ihren gesamten Drehzahlbereich rauf- und runterfährt, ohne dabei einen Bearbeitungsprozess auszuführen und sie das Ansteuern der Spindeln über einen NC-Unterprogrammteil ausführen kann, der zusammen mit dem Datenwort für den Überwachungsabschnitt aufgerufen wird.

18. Verfahren nach Anspruch 16 oder 17, **dadurch gekennzeichnet, dass** die Maschinensteuerung den Überwachungsabschnitt zur Überprüfung von Werkzeugspindeln dann ausführt, wenn sich kein Werkzeug in der Maschine befindet, so dass die Messsignale nicht durch das Werkzeug verfälscht werden können.

19. Verfahren nach Anspruch 16 oder 17, **dadurch gekennzeichnet, dass** die Maschinensteuerung den Überwachungsabschnitt zur Überprüfung von werkstückspindeln dann ausführt, wenn sich kein Werkstück in der Maschine befindet und das Werkstückfutter identisch positioniert ist, so dass die Messsignale nicht durch das Werkstück oder das Werkstückfutter verfälscht werden können.

20. Verfahren nach Anspruch 16 bis 19, **dadurch gekennzeichnet, dass** während des Aufrufens der jeweiligen Überwachungsabschnitte für die Überprüfung der Werkzeug- oder Werkstückspindeln die jeweiligen Drehzahlverläufe einschließlich der Beschleunigungs- und Abbremsphasen stets identisch sind und die jeweiligen Überwachungszyklen für die entsprechenden Werkzeug- oder Werkstückspindeln in regelmäßigen zeitlichen Abständen, durch die Maschinensteuerung bei identischen Betriebsbedingungen der Werkzeugmaschine wiederholt ausgelöst werden.

21. Verfahren nach Anspruch 16 bis 20, **dadurch gekennzeichnet, dass** die Überwachungsabschnitte zur zielgerichteten Überprüfung von Werkzeug- oder werkstückspindein von der Maschinensteuerung praktisch unbegrenzt oft innerhalb der Lebensdauer einer Werkzeugmaschine vorgegeben werden können.

22. Verfahren nach Anspruch 21, **dadurch gekennzeichnet, dass** der zeitliche Abstand zwischen jeweils zwei gleichen Überwachungsabschnitten zur zielgerichteten Überprüfung von Werkzeug- oder Werkstückspindeln von der Maschinensteuerung so vorgegeben ist, wie eine gerade noch wahrnehmbare, verschleißbedingte Änderung an den Werkzeug- oder Werkstückspindeln zeitlich zu erwarten wäre.

23. Verfahren nach Anspruch 16 bis 22, **dadurch gekennzeichnet, dass** bei neuen bzw. einwandfreien, unverschlissenen Werkzeug- oder Werkstückspindeln jeweils ein Teach-In-Überwachungsabschnitt durchgeführt wird, bei dem die Messsignale bzw. Messsignalkurven der Sensoren im Überwachungssystem abgespeichert und in Relation dazu die Schaltschwellen bzw. Schattschweüenkurven für die maximal zulässigen Abweichungen der Sensorsignale für die künftigen Überwachungsabschnitte bis zum Ende der Lebensdauer der Werkzeug- oder Werkstückspindeln in der Werkzeugmaschine festgelegt werden.

24. Verfahren nach Anspruch 16 bis 23, **dadurch gekennzeichnet, dass** die Messsignale bzw. Messsignalkurven der Sensoren aus den aufeinanderfolgenden gleichen Überwachungsabschnitten zur Überprüfung von Werkzeug- oder Werkstückspindeln im Überwachungssystem abgespeichert und jederzeit ausgelesen werden können.

25. Verfahren nach Anspruch 16 bis 23, **dadurch gekennzeichnet**, das nach einer Maschinenkollision oder einem Werkzeugbruch, wie es das Überwachungssystem standardmäßig feststellen kann und an die Maschinensteuerung meldet, die Maschinensteuerung nach Bereinigung der Kollisions- oder Bruchsituation mit Beginn der regulären Bearbeitung im Automatikbetrieb zunächst einen im Hinblick auf die sonst übliche zeitliche Abfolge einen außerplanmäßigen Überwachungsabschnitt zur zielgerichteten Überprüfung der Werkzeug- oder Werkstückspindeln ausführt und dass das Überwachungssystem die Messsignale bzw. Messsignalkurven der Sensoren in diesem Fall separat abspeichert um eventuelle Schäden durch die Kollision oder den Werkzeugbruch an den Werkzeug- oder Werkstückspindeln zu dokumentieren.

26. Verfahren nach Anspruch 16 und 17, **dadurch gekennzeichnet, dass** insbesondere in der Massenfertigung von Werkstücken die Maschinensteuerung zur Überprüfung von Werkzeug- oder Werkstückspindeln auf Schäden bzw. verschleiß das normale NC-Programm zur Bearbeitung dieses Werkstückes durchfährt, jedoch jeweils einen spezifischen Überwachungsabschnitt zur Überwachung der Werkzeug- oder Werkstückspindeln auf Schäden bzw. Verschleiß beim jeweiligen Hochlaufen der Spindel vor dem Bearbeitungsprozess mit dem jeweiligen Werkzeug oder Werkstück auf die jeweilige Solldrehzahl zusätzlich zu den normalen Überwachungszyklen zur Überwachung von Werkzeugen, Werkstücken oder Bearbeitungsprozessen an das Überwachungssystem leitet und dabei die Messsignale in der Hochlaufphase der Spindel vorzugsweise durch Schwellen von Signalmusterkurven aus einem entsprechenden Teach-In Überwachungsabschnitt überprüft.

27. Verfahren nach Anspruch 26, **dadurch gekennzeichnet, dass** die entsprechende Überprüfung auch beim Runterlaufen der Spindel möglich ist.

28. Verfahren nach Anspruch 26 oder 27, **dadurch gekennzeichnet, dass** die entsprechende Überprüfung der Werkzeug- oder Werkstückspindeln auf Schäden bzw. Verschleiß nur durch Überprüfung der Messsignalwerte innerhalb eines kurzen Zeitfensters während des Hoch- oder Runterlaufens der Spindel erfolgt und hierfür von der Maschinensteuerung ein entsprechend kurzer Überwachungsabschintt an die Überwachungsvorrichtung geleitet wird.

29. Verfahren nach Anspruch 6, **dadurch gekennzeichnet, dass** zur Überprüfung von unzulässiger Unwucht an Werkzeug- oder Werkstückspindeln bzw. von unzulässiger Unwucht an Bohr- oder Fräswerkzeugen die Werkzeug- oder Werkstückspindeln vorzugsweise am Spindelgehäuse in der Nähe der Lagerungen über Schwingungssensoren zur Erfassung von Spindel- oder Werkzeugschwingungen und/oder über Abstandssensoren zur Erfassung der Verlagerungen zwischen zwei Spindelbauteilen, bevorzugt von Rotor und Stator zueinander verfügen, ferner Sensoren zur Erzeugung eines Impulses je Spindelumdrehung besitzen, der es dem Überwachungssystem erlaubt, nur die Maximalwerte des Schwingungssignals innerhalb jeder Spindelumdrehung zu Vergleichs-zwecken mit Schwellwerten einzulesen oder die Schwingungs- oder Abstandssignale über ein impuls- bzw. drehzahlabhängiges Kerbfilter von Störschwingungen zu befreien.

30. Verfahren nach Anspruch 29, **dadurch gekennzeichnet, dass** die Maschinensteuerung in der Zeit, in der sie den Überwachungsabschnitt zur Überprüfung von Werkzeug- oder Werkstückspindeln auf Unwucht an das Überwachungssystem vorgibt, auch die Spindeln in die zu überprüfenden Drehzahlbereiche steuert, ohne das diese dabei Werkzeuge oder Werkstücke tragen und sie das Ansteuern der Spindeln über einen NC-Unterprogrammteil ausführen kann, der zusammen mit dem Datenwort für den Überwachungsabschnitt aufgerufen wird.

31. Verfahren nach Anspruch 29 oder 30, **dadurch gekennzeichnet, dass** während des Aufrufens der jeweiligen Überwachungsabschnitte für die Überprüfung von Werkzeug- oder werkstückspindeln auf Unwucht die jeweiligen Drehzahlen stets identisch sind und die jeweiligen Überwachungszyklen für die entsprechenden Werkzeug- oder Werkstückspindeln in regelmäßigen zeitlichen Abständen, durch die Maschinensteuerung wiederholt ausgelöst werden.

32. Verfahren nach Anspruch 29 bis 31, **dadurch gekennzeichnet, dass** die Überwachungsabschnitte zur zielgerichteten Überprüfung von Werkzeug- oder Werkstückspindeln auf Unwucht von der Maschinensteuerung praktisch unbegrenzt oft innerhalb der Lebensdauer einer Werkzeugmaschine vorgegeben werden können.

33. Verfahren nach Anspruch 32, **dadurch gekennzeichnet, dass** der zeitliche Abstand zwischen jeweils zwei gleichen Überwachungsabschnitten zur zielgerichteten Überprüfung von Werkzeug- oder Werkstückspindeln auf Unwucht von der Maschinensteuerung so vorgegeben ist, wie eine gerade noch wahrnehmbare, unwuchtbedingte Änderung an den Werkzeug- oder Werkstückspindein zeitlich zu erwarten währe.

34. Verfahren nach Anspruch 29 bis 33, **dadurch gekennzeichnet, dass** bei neuen bzw. einwandfrei gewuchteten Werkzeug- oder Werkstückspindeln jeweils ein Teach-In-Überwachungsabschnitt durchgeführt wird, bei dem die Messsignale der Sensoren im Überwachungssystem abgespeichert und in Rotation dazu die Schaltschwellen für die maximal zulässigen Abweichungen der Sensorsignale für die künftigen Überwachungsabschnitte bis zum Erreichen einer unzulässigen Unwucht der Werkzeug- oder Werkstückspindeln festgelegt werden.

35. Verfahren nach Anspruch 29 bis 34, **dadurch gekennzeichnet, dass** die Messsignale der Sensoren aus den aufeinanderfolgenden gleichen Überwachungsabschnitten zur Überprüfung der Unwucht von Werkzeug- oder Werkstückspindeln im Überwachungssystem abgespeichert und jederzeit ausgelesen werden können.

36. Verfahren nach Anspruch 29 und 30, **dadurch gekennzeichnet, dass** insbesondere in der Massenfertigung von Werkstücken die Maschinensteuerung zur Überprüfung von Bohr- und Fräswerkzeugen auf unzulässige Unwucht das normale NC-Programm zur Bearbeitung dieses Werkstückes durchfährt, jedoch zusätzlich jeweils einen werkzeugspezifischen Überwachungsabschnitt zur Überwachung der jeweiligen Bohr- oder Fräswerkzeug auf unzulässige Unwucht beim jeweiligen Hochlaufen der Werkzeugspindel mit dem jeweiligen Werkzeug auf die jeweilige Solldrehzahl dem Überwachungssystem zusätzlich zuleitet.

37. Verfahren nach Anspruch 36, **dadurch gekennzeichnet, dass** die entsprechende Überprüfung der Werkzeugspindeln auf unzulässige Unwucht der jeweiligen Bohr- oder Fräswerkzeuge nur durch Überprüfung der Messsignalwerte innerhalb eines kurzen Zeitfensters während des Hochlaufens der Spindel erfolgt und hierfür von der Maschinensteuerung ein entsprechend kurzer Überwachungsabschnitt an die Überwachungsvorrichtung geleitet wird und dass dieser vorzugsweise bei ca. 50% der Sollspindeldrehzahl übergeben wird um ein weiteres Hochlaufen bei unzulässiger Unwucht der Werkzeugspindeln mit dem jeweiligen Bohr- oder Fräswerkzeug durch umgehende Abschaltung der Spindel vermeiden zu können.

38. verfahren nach Anspruch 36 und 37, **dadurch gekennzeichnet, dass** bei neuen oder einwandfrei gewuchteten Werkzeugspindeln und jeweiligen Pseudowerkzeugen mit definierten noch gerade tolerierbaren Unwuchten anstelle der Originalwerkzeuge in den Werkzeugspindeln jeweils einmalig ein Teach-In- Überwachungsabschnitt für alle Werkzeugtypen durchgeführt wird, bei dem die Messsignale der Sensoren im Überwachungssystem abgespeichert und entsprechend dazu die Schaltschwellen für die maximal zulässigen Abweichungen der Sensorsignale für die künftigen Überwachungsabschnitte bis zum Erreichen einer unzulässigen Unwucht an den Bohr- und Fräswerkzeugen festgelegt werden.

39. Verfahren nach Anspruch 6, **dadurch gekennzeichnet, dass** zur Überwachung von Schäden oderVerschleiß an sonstigen motorbetriebenen Vorrichtungen der Maschine, wie Hydraulikaggregat, Kühlschmiermittelpumpe, Antrieb der Schutztür etc., im folgenden Aggregate genannt, Messsignale von Strom- oder Leistungssensoren an den Antriebsmotoren bzw. für eine Überwachung von Geräuschen oder Schwingungen an den Aggregaten Geräusche und Schwingungen an einen oder mehrere Körperschallsensoren und/oder Schwingungssensoren erfasst werden.

40. verfahren nach Anspruch 39, **dadurch gekennzeichnet, dass** die Maschinensteuerung in der Zeit in der sie den Überwachungsabschnitt zur Überprüfung von Aggregaten an das Überwachungssystem vorgibt, auch die entsprechenden Aggregate über die zu überprüfenden Leistungsbereiche, vorzugsweise über die gesamten Leistungsbereiche betreibt bzw. hin und her bewegt, ohne dabei einen Bearbeitungsprozess auszuführen und sie diese Bewegungen über einen NC-Unterprogrammteil ausführen kann, dass zusammen mit dem Datenwort für den Überwachungsabschnitt aufgerufen wird.

41. Verfahren nach Anspruch 40, **dadurch gekennzeichnet, dass** die Maschinensteuerung den Überwachungsabschnitt zur Überprüfung von Aggregaten dann ausführt, wenn sich kein Werkstück in der Maschine befindet, so dass ohne Kollisionsgefahr und ohne Bearbeitungsprozess die Aggregate in ihrem gesamten Leistungsbereiche betrieben bzw. hin und her bewegt werden können.

42. Verfahren nach Anspruch 40 bis 41, **dadurch gekennzeichnet, dass** der Überwachungsabschnitt zur zielgerichteten Überprüfung von Aggregaten von der Maschinensteuerung praktisch unbegrenzt oft innerhalb der Lebensdauer einer Werkzeugmaschine vorgegeben werden kann.

43. Verfahren nach Anspruch 42, **dadurch gekennzeichnet, dass** der zeitliche Abstand zwischen jeweils zwei gleichen Überwachungsabschnitten zur zielgerichteten Überprüfung von Aggregaten von der Maschinensteuerung so vorgegeben ist, wie eine gerade noch wahrnehmbare, verschleißbedingte Änderung an den Aggregaten zeitlich zu erwarten währe.

44. Verfahren nach Anspruch 40 bis 43, **dadurch gekennzeichnet, dass** bei neuen bzw. einwandfreien, unverschlissenen Aggregaten ein Teach-In-Überwachungsabschnitt durchgeführt wird, bei dem die Messsignale bzw. Messsignalkurven der Sensoren im Überwachungssystem abgespeichert und in Relation dazu die Schaltschwellen bzw. Schaltschwellenkurven für die maximal zulässigen Abweichungen der Sensorsignale für die künftigen Überwachungsabschnitte bis zum Ende der Lebensdauer der Aggregate der Werkzeugmaschine festgelegt werden.

45. Verfahren nach Anspruch 40 bis 44, **dadurch gekennzeichnet, dass** die Messsignale bzw. Messsignalkurven der Sensoren aus den aufeinanderfolgenden gleichen Überwachungsabschnitten zur Überprüfung der Aggregate im Überwachungssystem abgespeichert und jederzeit ausgelesen werden können.

## Claims

1. A monitoring system for the process-accompanying monitoring of tools, workpieces or treatment processes in machine tools of the cutting type for rotating, drilling or milling, with the purpose of detecting at least one of the conditions of tool breakage, tool breakout, tool wear, contact between tool and workpiece with or without workpiece gauging, machine collision or process abnormities such as rattling, or tool-, workpiece- or cut-specific overload or underload, comprising
- at least one sensor for the detection of measurement signals from the treatment process, which are representative of at least a direction of force, a resultant force, a pressure, a moment of rotation, an engine performance, an engine current, a vibration, an acceleration, a structure-borne sound or a change of distance between two machine components,
- at least one monitoring hardware with software for the storing and comparing of monitoring data in tool- or cut-specific monitoring stages which are preset by the machine control means through the NC or/and SPC program via an interface and in which measurement signals or measurement signal curves of at least one sensor are compared with stored monitoring thresholds by means of monitoring and evaluation strategies in such a manner that, in case of measurement signals violating the monitoring thresholds, a corresponding message is provided to the machine control means to thus initiate a corresponding reaction of the machine,
- at least one bidirectional interface, preferably a field bus interface, between the monitoring hardware and the machine control means, the bidirectional interface performing a data exchange between the machine and the monitoring system and being particularly suited to transmit the tool- or cut-specific monitoring stages in the form of data words as distinct numbers or instructions, preferably as tool codes, tool correction or position numbers, cutting code, H and M instructions, from the NC or SPC program to the monitoring system for dividing the monitoring into a plurality of monitoring stages,
- and, preferably, operating hardware with software for operating and/or parametrizing the monitoring system and/or for visualizing the measurement signals,
**characterized in**
**that** the monitoring system is used in other monitoring stages, which at times when no treatment process occurs are predetermined by the machine control, to perform a detection, monitoring or well-aimed examination of faulty conditions on components of machine tools, preferably of damage or wear on the feed slides or on the tool or workpiece spindles.

2. The monitoring system according to claim 1, **characterized in that** the monitoring system can comprise, for each monitoring task to be performed on components of machine tools, one or a plurality of additional sensors onto which the monitoring system is automatically switched when the corresponding monitoring stage for the monitoring task to be performed on components of machine tools is called up by the machine control.

3. The monitoring system according to claim 1 and 2, **characterized in that**, for the monitoring of damage or wear on feed slides, there are provided
- force sensors for detecting the feed force in the slide moving direction on one of the feed spindle bearing blocks,
- current or performance sensors on the feed spindle engines, or,
- for the monitoring of noises or vibrations on feed slides, one or a plurality of sensors for structure-borne noise and/or vibration sensors arranged on the slides, the moving tracks or/and the spindle bearing blocks.

4. The monitoring system according to any one of claims 1 to 3, **characterized in that** the monitoring of damage or wear on the feed slides is performed by reading out the measurement values of the existing current sensors on the drive means from the machine control, via the bidirectional interface.

5. The monitoring system according to claims 1 and 4, **characterized in that**, for the monitoring of damage or wear on other engine-driven devices of the machine, such as an hydraulic aggregate, a cooling lubricant pump, drive means for the protective door etc., to be referred to as aggregates hereunder, these are provided with current or performance sensors on the drive engines, or, for the monitoring of noises or vibrations on the aggregates, these are provided with one or a plurality of sensors for structure-borne noise and/or with vibration sensors.

6. A method for the process-accompanying monitoring of machine tool components by use of a monitoring system according to any one of claims 1 to 5, wherein
- measurement signals from the treatment process, which are representative of at least a direction of force, a resultant force, a pressure, a moment of rotation, an engine performance, an engine current, a vibration, an acceleration, a structure-borne sound or a change of distance between two machine components, are detected by at least one sensor,
- monitoring data in tool- or cut-specific monitoring stages are stored and compared by at least one monitoring hardware with software, the monitoring stages being preset by the machine control means through the NC or/and SPC program via an interface and, in the monitoring stages, the measurement signals or measurement signal curves of at least one sensor are compared with stored monitoring thresholds by means of monitoring and evaluation strategies in such a manner that, in case of measurement signals violating the monitoring thresholds, a corresponding message is provided to the machine control means to thus initiate a corresponding reaction of the machine,
- a data exchange between the machine and the monitoring system is performed via a bidirectional interface, wherein the tool- or cut-specific monitoring stages are transmitted in the form of data words as distinct numbers or instructions, preferably as tool codes, tool correction or position numbers, cutting code or H and M instructions, from the NC or SPC program to the monitoring system for dividing the monitoring into a plurality of monitoring stages,
**characterized in**
in other monitoring stages, which at times when no treatment process occurs are predetermined by the machine control, a detection, monitoring or well-aimed examination of faulty conditions on components of machine tools, preferably of damage or wear on the feed slides or on the tool or workpiece spindles, is performed by the monitoring system.

7. The method for the process-accompanying monitoring according to claim 6, **characterized in that** the machine control, during the period in which it sets the monitoring system to enter the monitoring state for the monitoring of feed slides, will also move the one or the plurality of feed slides across the moving regions to be monitored, preferably across the complete moving regions without performing a treatment process at this time, and that the machine control can carry out these movements through an NC subprogram portion which is called up together with the data word for the monitoring stage.

8. The method according to claim 7, **characterized in that** the machine control performs the monitoring stage for the monitoring of feed slides when no workpiece is arranged in the machine so that the complete moving regions can be moved or reciprocated without a danger of collision and without a treatment process.

9. The method according to claim 7, **characterized in that**, particularly in the mass production of workpieces, the machine control, for the monitoring stage for the monitoring of feed slides, will cause its feed slides to perform the normal NC program for treatment of this workpiece but will not insert a workpiece into the machine for this purpose and in this case, instead of the monitoring stages for the monitoring of tools, workpieces or treatment processes, will transmit the monitoring stage for the monitoring of feed slides to the monitoring system.

10. The method according to any one of claims 7 to 9, **characterized in that**, during the call-up of the monitoring stage, the movement of the feed slide is always identical and the monitoring cycle is repeatedly initiated by the machine control at regular time intervals and with identical operating conditions of the machine tool.

11. The method according to any one of claims 7 to 10, **characterized in that** the monitoring stage for the well-aimed monitoring of feed slides can be preset by the machine control virtually for an unlimited number of times during the lifespan of the machine tool.

12. The method according to claim 11, **characterized in that** the distance in time between respectively two identical monitoring stages for the well-aimed monitoring of feed slides is preset by the machine control in accordance to the time when a just about perceptible wear-induced change on the moving tracks would be expected.

13. The method according to any one of claims 7 to 12, **characterized in that** in new or unobjectionable, wear-free feed slides, a teach-in monitoring stage is performed in which the measurement signals or measurement signal curves of the sensors are stored in the monitoring system and, in relation thereto, the switching thresholds or switching threshold curves for the maximum allowable deviations of the sensor signals for the future monitoring stages are determined up to the end of the lifespan of the feed slides of the machine tool.

14. The method according to any one of claims 7 to 13, **characterized in that** the measurement signals or measurement signal curves of the sensors from the sequential identical monitoring stages for the monitoring of the feed slides can be stored in the monitoring system and be read out at all times.

15. The method according to any one of claims 7 to 14, **characterized in that**, after machine collision or tool breakage, which the machine control can detect as a matter of a standard feature and which it will communicate to the machine control, the machine control, after elimination of the collision or breakage situation, will first perform, at the start of the regular treatment in automatic operation, a - relatively to the otherwise common chronological order - unscheduled monitoring stage for the well-aimed monitoring of the feed slides, and that the monitoring system will in this case separately store the measurement signals or measurement signal curves of the sensors in order to document possible damage caused by the collision or the tool breakage on the feed slides.

16. The method according to claim 6, **characterized in that**, for the monitoring of damage or wear on tool or workpiece spindles, primarily on their bearings, as well as for the examination of inadmissible imbalance on tool or workpiece spindles, these are provided with sensors for structure-borne sound provided for the detection of the running noise, or with vibration sensors for the detection of spindle vibrations, or with distance sensors for the detection of displacements between two spindle components, preferably between rotor and stator relative to each other, or with temperature sensors for the detection of power-loss-induced increases in temperature, which are each arranged in the immediate region of the bearings, or with current or performance sensors on the tool or workpiece engine, further by reading out the measurement values of the existing current sensors on the spindle drive means from the machine control, via the bidirectional interface, for the detection of power-loss-induced increases in current or performance.

17. The method according to claim 16, **characterized in that** the machine control during the time in which it sets the monitoring system to the monitoring stage for the monitoring of tool or workpiece spindles, will control also the spindles into the rotational speed ranges to be monitored, and preferably will increase and decrease their rotation through their whole rotational speed range without performing a treatment process at this time, and can perform the controlling of the spindles through an NC subprogram portion which is called up together with the data word for the monitoring stage.

18. The method according to claim 16 or 17, **characterized in that** the machine control performs the monitoring stage for the monitoring of tool spindles when no tool is arranged in the machine so that the measurement signals cannot be adulterated by the tool.

19. The method according to claim 16 or 17 **characterized in that** the machine control means performs the monitoring stage for the monitoring of workpiece spindles when no tool is arranged in the machine and the workpiece chuck is positioned identically so that the measurement signals cannot be adulterated by the workpiece or the workpiece chuck.

20. The method according to any one of claims 16 to 19, **characterized in that**, during the calling-up of the respective monitoring stages for the monitoring of the tool or workpiece spindles, the respective developments of the rotational speeds inclusive of the acceleration or deceleration phases are always identical, and that the respective monitoring cycles for the corresponding tool or workpiece spindles are repeatedly initiated by the machine control with identical operating conditions of the machine tool.

21. The method according to any one of claims 16 to 20, **characterized in that** the monitoring stages for the well-aimed monitoring of tool or workpiece spindles can be preset by the machine control virtually for an unlimited number of times during the lifespan of a machine tool.

22. The method according to claim 21, **characterized in that** the distance in time between respectively two identical monitoring stages for the well-aimed monitoring of tool or workpiece spindles is preset by the machine control in accordance to the time when a just about perceptible wear-induced change on the moving tracks would be expected.

23. The method according to any one of claims 16 to 22, **characterized in that** in new or unobjectionable, wear-free tool or workpiece spindles, respectively one teach-in monitoring stage is performed in which the measurement signals or measurement signal curves of the sensors are stored in the monitoring system and, in relation thereto, the switching thresholds or switching threshold curves for the maximum allowable deviations of the sensor signals for the future monitoring stages are determined up to the end of the lifespan of the tool or workpiece spindles in the machine tool.

24. The method according to any one of claims 16 to 23, **characterized in that** the measurement signals or measurement signal curves of the sensors from the sequential identical monitoring stages for the monitoring of the tool or workpiece spindles, can be stored in the monitoring system and be read out at all times.

25. The method according to any one of claims 16 to 23, **characterized in that**, after machine collision or tool breakage, which the machine control can detect as a matter of a standard feature and which it communicates to the machine control, the machine control, after elimination of the collision or breakage situation, will first perform, at the start of the regular treatment in automatic operation, a - relatively to the otherwise common chronological order - unscheduled monitoring stage for the well-aimed monitoring of the tool or workpiece spindles, and that the monitoring system will in this case separately store the measurement signals or measurement signal curves of the sensors in order to document possible damage caused by the collision or the tool breakage on the tool or workpiece spindles.

26. The method according to claim 16 and 17, **characterized in that**, particularly in the mass production of workpieces, the machine control, for checking the tool or workpiece spindles for damage or wear, will perform the normal NC program for treatment of this workpiece but will transmit to the monitoring system, in addition to the normal monitoring cycles for the monitoring of tools, workpieces or treatment processes, a specific monitoring stage for checking the tool or workpiece spindles for damage or wear during the respective acceleration of the spindle to the respective desired rotational speed prior to the treatment process involving the respective tool or workpiece, and in the process will check the measurement signals in the acceleration phase of the spindle preferably by expansion of signal pattern curves from a corresponding teach-in monitoring stage.

27. The method according to claim 26, **characterized in that** the corresponding checking can be performed during the deceleration of the spindle.

28. The method according to claim 26 or 27, **characterized in that** the corresponding checking of the tool or workpiece spindles for damage or wear is performed solely by checking the measurement signal values within a short time slot during the acceleration or deceleration of the spindle and that, for this purpose, a correspondingly short monitoring stage is transmitted to the monitoring device.

29. A method according to claim 6, **characterized in that**, for the monitoring of inadmissible imbalance on tool or workpiece spindles or of inadmissible imbalance on drilling or milling tools, the tool or workpiece spindles are provided, preferably on the spindle housing near the bearings, with vibration sensors for the detection of spindle or workpiece vibrations, or with distance sensors for the detection of displacements between two spindle components, preferably between rotor and stator relative to each other, further with sensors for generating one pulse per spindle revolution which makes it possible for the monitoring system to read only the maximum values of the vibration signal within each spindle revolution for purposes of comparison to the threshold values, or to eliminate disturbing vibrations from the vibration or distance signals by means of a pulse- or rotational-speed-dependent notch filter.

30. The method according to claim 29, **characterized in that** the machine control during the time in which it sets the monitoring system to the monitoring stage for the checking of tool or workpiece spindles for imbalance, will control also the spindles into the rotational speed ranges to be monitored, while these do not carry tools or workpieces at this time, and can perform the controlling of the spindles through an NC subprogram portion which is called up together with the data word for the monitoring stage.

31. The method according to claim 29 or 30, **characterized in that**, during the calling-up of the respective monitoring stages for the checking of tool or workpiece spindles for imbalance, the respective rotational speeds are always identical, and that the respective monitoring cycles for the corresponding tool or workpiece spindles can be repeatedly initiated by the machine control at regular time intervals.

32. The method according to any one of claims 29 to 31, **characterized in that** the monitoring stages for the well-aimed checking of tool or workpiece spindles for imbalance can be preset by the machine control virtually for an unlimited number of times during the lifespan of a machine tool.

33. The method according to claim 32, **characterized in that** the distance in time between respectively two identical monitoring stages for the well-aimed checking of tool or workpiece spindles for imbalance is preset by the machine control in accordance to the time when a just about perceptible imbalance-induced change on the tool or workpiece spindles would be expected.

34. The method according to any one of claims 29 to 33, **characterized in that** in new or unobjectionably balanced tool or workpiece spindles, respectively one teach-in monitoring stage is performed in which the measurement signals of the sensors are stored in the monitoring system and, in relation thereto, the switching thresholds for the maximum allowable deviations of the sensor signals for the future monitoring stages are determined up to the point when an inadmissible imbalance of the tool or workpiece spindles is reached.

35. The method according to any one of claims 29 to 34, **characterized in that** the measurement signals of the sensors from the sequential identical monitoring stages for the monitoring of imbalance of the tool or workpiece spindles can be stored in the monitoring system and be read out at all times.

36. The method according to claim 29 and 30, **characterized in that**, particularly in the mass production of workpieces, the machine control, in order to check drilling and milling tools for inadmissible imbalance, will perform the normal NC program for treatment of this workpiece but will additionally transmit to the monitoring system respectively one workpiece-specific monitoring stage for checking the respective drilling and milling tools for inadmissible imbalance during the respective acceleration of the tool spindle with the respective tool to the respective desired rotational speed.

37. The method according to claim 36, **characterized in that** the corresponding checking of the workpiece spindles for inadmissible imbalance of the respective drilling and milling tools is performed only by checking the measurement signal values within a short time slot during the acceleration of the spindle and that, for this purpose, a correspondingly short monitoring stage is transmitted from the machine control to the monitoring device and that this monitoring stage is preferably transmitted at about 50% of the desired rotational number so that a further acceleration in a condition of undesired imbalance of the workpiece spindles with the respective drilling or milling tool can be avoided by direct switch-off of the spindle.

38. The method according to claims 36 and 37, **characterized in that** in new or unobjectionably balanced tool spindles and respective dummy tools with defined, just about tolerable imbalances instead of the original tools in the tool spindles, there is performed respectively once a teach-in monitoring stage for all tool types wherein the measurement signals of the sensors are stored in the monitoring system and, in correspondence thereto, the switching thresholds for the maximum allowable deviations of the sensor signals for the future monitoring stages are determined up to the point when an inadmissible imbalance of the drilling or milling is reached.

39. The monitoring system according claim 6, **characterized in that**, for the monitoring of damage or wear on other engine-driven devices of the machine, such as an hydraulic aggregate, a cooling lubricant pump, drive means for the protective door etc., to be referred to as aggregates hereunder, measuring signals of current or performance sensors on the drive engines, or, for the monitoring of noises or vibrations on the aggregates, noises and vibrations are detected by one or a plurality of sensors for structure-borne noise and/or by vibration sensors.

40. A method according to claim 39, **characterized in that** the machine control during the time in which it sets the monitoring system to the monitoring stage for the checking of aggregates, will operate or reciprocate also the corresponding aggregates through the performance ranges to be monitored, preferably through the complete performance ranges, while not carrying out a treatment process at this time, and can perform these movements through an NC subprogram portion which is called up together with the data word for the monitoring stage.

41. The method according to claim 40, **characterized in that** the machine control performs the monitoring stage for the monitoring of aggregates when no workpiece is arranged in the machine so that the aggregates can be operated or reciprocated throughout their performance range without a danger of collision and without a treatment process.

42. The method according to any one of claims 40 to 41, **characterized in that** the monitoring stage for the well-aimed monitoring of aggregates can be preset by the machine control virtually for an unlimited number of times during the lifespan of a machine tool.

43. The method according to claim 42, **characterized in that** the distance in time between respectively two identical monitoring stages for the well-aimed checking of aggregates is preset by the machine control in accordance to the time when a just about perceptible wear-induced change on the aggregates would be expected.

44. The method according to any one of claims 40 to 43, **characterized in that** in new or unobjectionable, wear-free aggregates, a teach-in monitoring stage is performed in which the measurement signals or measurement signal curves of the sensors are stored in the monitoring system and, in relation thereto, the switching thresholds or switching threshold curves for the maximum allowable deviations of the sensor signals for the future monitoring stages are determined up to the end of the lifespan of the aggregates.

45. The method according to any one of claims 40 to 44, **characterized in that** the measurement signals or measurement signal curves of the sensors from the sequential identical monitoring stages for the monitoring of the aggregates can be stored in the monitoring system and be read out at all times.

## Revendications

1. Système de surveillance permettant de surveiller lors de processus des outils, des pièces ou des processus d'usinage dans des machines-outils, effectuant le tournage, le perçage ou le fraisage avec enlèvement de copeaux, dans le but de détecter au moins l'un des états parmi une cassure d'outil, un éclatement d'outil, une usure d'outil, un contact d'un outil avec une pièce avec ou sans contrôle dimensionnel de pièce, des collisions de machines ou des dégénérescences de processus tel qu'un broutage, une surcharge ou une charge incomplète spécifiques à l'outil, à la pièce ou à la coupe, ledit système comprenant :
- au moins un capteur permettant de détecter des signaux de mesure provenant du processus d'usinage, lesquels signaux de mesure pouvant représenter au moins une direction de force, une résultante de forces, une pression, un couple de rotation, une puissance de moteur, un courant de moteur, une vibration, une accélération, un bruit de structure ou une variation de distance entre deux composants de machine,
- au moins un équipement informatique de surveillance avec un logiciel permettant la mémorisation et la comparaison de données de surveillance dans des segments de surveillance spécifiques à l'outil ou à la coupe qui sont prescrits par la commande de machine par l'intermédiaire du programme de commande numérique et/ou de commande programmable par le biais d'une interface et dans lesquels une comparaison des signaux de mesure ou des courbes de signal de mesure, délivrés par au moins un capteur, est effectuée avec des seuils de surveillance en mémoire conformément à des stratégies de surveillance et d'exploitation de telle sorte que, dans le cas où des signaux de mesure franchissent les seuils de surveillance, un message correspondant est délivré à la commande de machine pour que la machine réagisse de façon appropriée,
- au moins une interface bidirectionnelle, avantageusement une interface à bus de zone, entre l'équipement informatique de surveillance et la commande de machine, l'interface bidirectionnelle effectuant un échange de données entre la machine et le système de surveillance et étant notamment appropriée pour transférer au système de surveillance les segments de surveillance spécifiques à l'outil ou à la coupe, sous la forme de mots de données représentant différents numéros ou différentes instructions, avantageusement un code d'outil, numéros de correction d'outil ou d'emplacement, un code de coupe, des instructions H ou M, provenant du programme de commande numérique ou de commande programmable afin de diviser la surveillance en différents segments de surveillance,
- et avantageusement un équipement informatique de commande avec logiciel permettant de commander et/ou de paramétrer le système de surveillance et/ou de visualiser les signaux de mesure,
**caractérisé en ce que**
le système de surveillance détecte, surveille ou contrôle de façon ciblée, dans d'autres segments de surveillance prescrits par la commande de machine à des moments où il n'y a aucun processus d'usinage, les états incorrects, au niveau de composants de machines-outils, avantageusement un endommagement ou une usure au niveau des chariots d'avancement ou au niveau des broches d'outil ou des broches porte-pièce.

2. Système de surveillance selon la revendication 1, **caractérisé en ce que** le système de surveillance comporte pour chaque tâche de surveillance, au niveau des composants de machines-outils, un ou plusieurs capteurs supplémentaires sur lesquels le système de surveillance commute automatiquement lorsque le segment de surveillance correspondant est appelé par la commande de machine pour la tâche de surveillance au niveau de composants de machines-outils.

3. Système de surveillance selon la revendication 1 et 2, **caractérisé en ce que**, pour surveiller un endommagement ou une usure au niveau des chariots d'avancement,
- des capteurs de force permettant de détecter la force d'avancement dans le sens de déplacement des chariots sont placés au niveau de l'un des supports de palier de la vis de commande d'avancement,
- des capteurs de courant ou de puissance sont placés au niveau des moteurs de la vis de commande d'avancement ou
- pour surveiller les bruits ou les vibrations au niveau des chariots d'avancement, un ou plusieurs capteurs de bruit de structure et/ou capteurs de variations sont placés sur les chariots, les glissières de guidage et/ou les supports de palier de vis.

4. Système de surveillance selon l'une des revendications 1 à 3, **caractérisé en ce que** la surveillance d'un endommagement ou d'une usure au niveau des chariots d'avancement est effectuée en lisant les valeurs de mesure des capteurs de courant, présents au niveau des entraînements d'avancement, dans la commande de machine par le biais de l'interface bidirectionnelle.

5. Système de surveillance selon les revendications 1 et 4, **caractérisé en ce que**, pour surveiller un endommagement respectivement une usure au niveau d'autres dispositifs de la machine entraînés par moteur, tels qu'une unité hydraulique, une pompe de réfrigérant lubrifiant, un entraînement de la porte de protection etc., appelés unités dans la suite, ces unités disposent de capteurs de courant ou de puissance au niveau des moteurs d'entraînement ou, pour surveiller les bruits ou les vibrations au niveau des unités, ces unités disposent d'un ou plusieurs capteurs de bruit de structure et/ou capteurs de vibrations.

6. Procédé permettant de surveiller, lors d'un processus, des composants de machines-outils avec un système de surveillance selon l'une des revendications 1 à 5, dans lequel
- les signaux de mesure provenant du processus d'usinage, qui peuvent représenter au moins une direction de force, une résultante de forces, une pression, un couple de rotation, une puissance de moteur, un courant de moteur, une vibration, une accélération, un bruit de structure ou une variation de distance entre deux composants de machine, sont détectés par au moins un capteur,
- des données de surveillance dans des segments de surveillance spécifiques à l'outil ou à la coupe sont mémorisées et comparées par au moins un équipement informatique de surveillance avec logiciel, les segments de surveillance étant prescrits par la commande de machine par l'intermédiaire du programme de commande numérique et/ou de commande programmable par le biais d'une interface et, dans les segments de surveillance, une comparaison des signaux de mesure ou des courbes de signal de mesure, délivrés par au moins un capteur, étant effectuée avec des seuils de surveillance en mémoire conformément à des stratégies de surveillance et d'exploitation de telle sorte que, dans le cas où des signaux de mesure franchissent les seuils de surveillance, un message correspondant est délivré à la commande de machine pour que la machine réagisse de façon appropriée,
- un échange de données entre la machine et le système de surveillance est effectué par le biais d'une interface bidirectionnelle, les segments de surveillance spécifiques à l'outil ou à la coupe, sous la forme de mots de données représentant différents numéros ou différentes instructions, avantageusement un code d'outil, des numéros de correction d'outil ou d'emplacement, un code de coupe, des instructions H ou M, étant transférés du programme de commande numérique ou de commande programmable au système de surveillance afin de diviser la surveillance en différentes segments de surveillance,
**caractérisé en ce que**
dans d'autres segments de surveillance, les états incorrects, prescrits par la commande de machine à des moments où il n'y a aucun processus d'usinage, au niveau de composants de machines-outils, avantageusement un endommagement ou une usure au niveau des chariots d'avancement ou au niveau des broches d'outil ou des broches porte-pièce, sont détectés, surveillés ou contrôlés de façon ciblée.

7. Procédé de surveillance lors de processus selon la revendication 6, **caractérisé en ce que**, au moment où la commande de machine prescrit au système de surveillance le segment de surveillance permettant de contrôler des chariots d'avancement, la commande de machine déplace également le chariot ou les chariots d'avancement sur les régions de déplacement à contrôler, avantageusement sur toutes les régions de déplacement, sans effectuer à ce moment un processus d'usinage, et peut effectuer ces déplacements par le biais d'un sous-programme de commande numérique qui est appelé conjointement avec le mot de données pour le segment de surveillance.

8. Procédé selon la revendication 7, **caractérisé en ce que** la commande de machine n'exécute le segment de surveillance permettant de contrôler des chariots d'avancement que lorsqu'il n'y a aucune pièce dans la machine de sorte que toutes les régions de déplacement peuvent être parcourues respectivement parcourues avec un mouvement alternatif sans risque de collision et sans processus d'usinage.

9. Procédé selon la revendication 7, **caractérisé en ce que**, notamment lorsque les pièces sont fabriquées en série et en ce qui concerne le segment de surveillance permettant de contrôler des chariots d'avancement, la commande de machine n'arrête pas le programme de commande numérique normal pour l'usinage de cette pièce avec son chariot d'avancement, mais n'introduit pour cela aucune pièce dans la machine et transmet dans ce cas au système de surveillance le segment de surveillance permettant de surveiller des chariots d'avancement à la place des segments de surveillance permettant de surveiller des outils, des pièces ou des processus d'usinage.

10. Procédé selon les revendications 7 à 9, **caractérisé en ce que**, pendant l'appel du segment de surveillance, le mouvement du chariot d'avancement est toujours le même et le cycle de surveillance est déclenché à des intervalles de temps réguliers par la commande de machine lorsque les conditions de fonctionnement de la machine-outil sont les mêmes.

11. Procédé selon les revendications 7 à 10, **caractérisé en ce que** le segment de surveillance destiné à contrôler de façon ciblée des chariots d'avancement peut être prescrit par la commande de machine pratiquement de façon illimitée, souvent pendant toute la durée de vie d'une machine-outil.

12. Procédé selon la revendication 11, **caractérisé en ce que** le laps de temps entre deux segments de surveillance identiques permettant de contrôler de façon ciblée des chariots d'avancement est prescrit par la commande de machine à une valeur de temps égale à la durée attendue d'une modification tout juste perceptible, due à l'usure, des glissières de guidage.

13. Procédé selon les revendications 7 à 12, **caractérisé en ce que**, dans le cas de nouveaux chariots d'avancement ou dans le cas de chariots d'avancement parfaits non usés, on met en oeuvre un segment de surveillance par apprentissage pendant lequel les signaux de mesure respectivement les courbes de signal de mesure des capteurs sont mémorisés dans le système de surveillance et les seuils de commutation respectivement les courbes de seuil de commutation sont déterminés, par rapport aux signaux respectivement courbes de signal, en ce qui concerne les écarts maximum permis des signaux de capteur pour les segments de surveillance futurs jusqu'à la fin de la durée de vie des chariots d'avancement de la machine-outil.

14. Procédé selon les revendications 7 à 13, **caractérisé en ce que** les signaux de mesure respectivement les courbes de signaux de mesure des capteurs provenant des segments de surveillance identiques successifs peuvent être mémorisés dans le système de surveillance et être lus à tout moment en vue de contrôler les chariots.

15. Procédé selon les revendications 7 à 14, **caractérisé en ce que**, après une collision de machine ou une cassure d'outil, qui peut être détectée par le système de surveillance et signalée à la commande de machine, la commande de machine met tout d'abord en oeuvre, en fonctionnement automatique, après avoir réglé la situation de collision ou de cassure au début de l'usinage régulier, un segment de surveillance programmé de l'extérieur, concernant la suite chronologique, pour contrôler de façon ciblée les chariots d'avancement et **en ce que** le système de surveillance mémorise dans ce cas séparément les signaux de mesure respectivement les courbes de signal de mesure des capteurs pour établir un journal sur les éventuels endommagements causés par la collision ou la cassure de l'outil au niveau des chariots d'avancement.

16. Procédé selon la revendication 6, **caractérisé en ce que**, pour surveiller un endommagement respectivement une usure au niveau des broches d'outil ou des broches porte-pièce, celles-ci doivent être dotées, avant leur montage, ainsi que pour contrôler un déséquilibre indésirable à leur niveau, de capteurs de bruit de structure permettant de détecter le bruit de roulement respectivement de capteurs de vibrations permettant de détecter des vibrations au niveau des broches respectivement de capteurs d'écartement permettant de détecter des déplacements entre deux composants de broche, de préférence entre un rotor et un stator, respectivement de capteurs de température permettant de détecter des augmentations de température dues à des pertes de puissance à chaque fois au niveau des paliers, respectivement de capteur de courant ou de puissance au niveau du moteur de broche d'outil ou de broche porte-pièce, en lisant également dans la commande de machine, par le biais de l'interface bidirectionnelle, les valeurs de mesure des capteurs de courant existants au niveau des entraînements de broche afin de détecter des augmentations de courant ou de puissance dues à des pertes de puissance.

17. Procédé selon la revendication 16, **caractérisé en ce que**, au moment où la commande de machine prescrit au système de surveillance le segment de surveillance permettant de contrôler des broches d'outil ou des broches porte-pièce, la commande de machine commande également les broches dans les plages de vitesse angulaire à contrôler, avantageusement en accélérant et ralentissant ces broches dans toute la plage de vitesse angulaire, sans réaliser à ce moment de processus d'usinage, et peut commander les broches par le biais d'un sous-programme de commande numérique qui est appelé conjointement avec le mot de données pour le segment de surveillance.

18. Procédé selon la revendication 16 ou 17, **caractérisé en ce que** la commande de machine ne met en oeuvre le segment de surveillance permettant de contrôler des broches d'outil que lorsqu'il n'y a aucun outil dans la machine de sorte que les signaux de mesure ne peuvent pas être faussés par l'outil.

19. Procédé selon la revendication 16 ou 17, **caractérisé en ce que** la commande de machine ne met e oeuvre le segment de surveillance permettant de contrôler des broches porte-pièce que lorsqu'il n'y a aucune pièce dans la machine et que le porte-pièce est positionné de la même façon de sorte que les signaux de mesure ne peuvent pas être faussés par la pièce ou le porte-pièce.

20. Procédé selon les revendications 16 à 19, **caractérisé en ce que**, pendant l'appel des segments de surveillance respectifs permettant de contrôler les broches d'outil ou les broches porte-pièce, les courbes de vitesse angulaire respectives sont toujours identiques y compris dans les phases d'accélération et de freinage et les cycles de surveillance respectifs des broches d'outil ou des broches porte-pièce correspondantes sont déclenchés de façon récurrente à des instants réguliers par la commande de machine dans des conditions de fonctionnement identiques de la machine-outil.

21. Procédé selon les revendications 16 à 20, **caractérisé en ce que** les segments de surveillance permettant de contrôler de façon ciblée des broches d'outil ou des broches porte-pièce peuvent être prescrits par la commande de machine de façon pratiquement illimitée, souvent pendant toute la durée de vie d'une machine-outil.

22. Procédé selon la revendication 21, **caractérisé en ce que** l'intervalle de temps entre deux segments de surveillance identiques permettant de contrôler des broches d'outil ou des broches porte-pièce est prescrit par la commande de machine à une valeur de temps égale à la durée attendue d'une modification tout juste perceptible, due à l'usure, des broches d'outil ou des broches porte-pièce.

23. Procédé selon les revendications 16 à 22, **caractérisé en ce que**, dans le cas de nouvelles broches d'outil ou de nouvelles broches porte-pièce respectivement dans le cas de broches d'outil ou de broches porte-pièce parfaites non usées, on met en oeuvre un segment de surveillance par apprentissage pendant lequel les signaux de mesure respectivement les courbes de signal de mesure des capteurs sont mémorisés dans le système de surveillance et les seuils de commutation respectivement les courbes de seuil de commutation sont déterminés, par rapport aux signaux respectivement courbes de signal, en ce qui concerne les écarts maximum permis des signaux de capteur pour les segments de surveillance futurs jusqu'à la fin de la durée de vie des broches d'outil ou des broches porte-pièce de la machine-outil.

24. Procédé selon les revendications 16 à 23, **caractérisé en ce que** les signaux de mesure respectivement les courbes de signal de mesure des capteurs provenant des segments de surveillance identiques successifs peuvent être mémorisées dans le système de surveillance et être lus à tout moment en vue de contrôler les broches d'outil ou les broches porte-pièce.

25. Procédé selon les revendications 16 à 23, **caractérisé en ce que**, après une collision de machine ou une cassure d'outil, qui peut être détectée par le système de surveillance et signalée à la commande de machine, la commande de machine met tout d'abord en oeuvre, en fonctionnement automatique, après avoir réglé la situation de collision ou de cassure au début de l'usinage régulier, un segment de surveillance programmé de l'extérieur, concernant la suite chronologique, pour contrôler de façon ciblée les broches d'outil ou les broches porte-pièce et **en ce que** le système de surveillance mémorise dans ce cas séparément les signaux de mesure respectivement les courbes de signal de mesure des capteurs pour établir un journal sur les éventuels endommagements causés par la collision ou la cassure de l'outil au niveau des broches d'outil ou des broches porte-pièce.

26. Procédé selon les revendications 16 et 17, **caractérisé en ce que**, notamment lorsque les pièces sont fabriquées en série et ce qui concerne le contrôle des broches d'outil ou des broches porte-pièce, la commande de machine n'arrête pas le programme de commande numérique normal pour l'usinage de cette pièce, mais transmet au système de surveillance un segment de surveillance spécifique permettant de contrôler les broches d'outil ou les broches porte-outil, pour voir si elles sont endommagées respectivement usées, en procédant, en plus des cycles de surveillance normaux permettant de surveiller les outils, les pièces ou les processus d'usinage, à une accélération des broches avant le processus d'usinage avec l'outil respectif ou la pièce respective à la vitesse angulaire respective de consigne, et contrôle alors les signaux de mesure dans la phase d'accélération des broches avantageusement par le biais de seuils de modèles de courbe de signal provenant d'un segment de surveillance par apprentissage correspondant.

27. Procédé selon la revendication 26, **caractérisé en ce que** le contrôle correspondant est également possible en procédant à ralentissement des broches.

28. Procédé selon les revendications 26 ou 27, **caractérisé en ce que** le contrôle correspondant des broches d'outil ou des broches porte-pièce pour savoir si elles sont endommagées ou usées n'est effectué qu'en contrôlant les valeurs de signal de mesure dans une courte fenêtre temporelle pendant l'accélération ou le ralentissement des broches et pour cela un court segment de surveillance correspondant est transmis au dispositif de surveillance par la commande de machine.

29. Procédé selon la revendication 6, **caractérisé en ce que**, pour contrôler un déséquilibre indésirable au niveau des broches d'outil ou des broches porte-pièce respectivement un déséquilibre indésirable au niveau d'outils de perçage ou de fraisage, les broches d'outil ou les broches porte-pièce disposent, avantageusement au niveau du boîtier de broche, au voisinage des paliers, de capteurs de vibration permettant de détecter des vibrations au niveau des broches ou de l'outil et/ou de capteurs de distance permettant de détecter des déplacements entre deux composants de broche, de préférence entre un rotor et un stator, et possèdent en outre des capteurs permettant de générer à chaque révolution de broche une impulsion qui permet au système de surveillance de lire seulement la valeur maximale du signal de vibration à l'intérieur de chaque révolution à des fins de comparaison avec des valeurs de seuil ou de débarrasser les signaux de vibration ou de distance de vibrations parasites au moyen d'un filtre coupe-bande, fonction de l'impulsion respectivement de la vitesse angulaire.

30. Procédé selon la revendication 29, **caractérisé en ce que**, au moment où la commande de machine prescrit au système de surveillance le segment de surveillance permettant de contrôler des broches d'outil ou des broches porte-pièce pour savoir s'il y a un déséquilibre, la commande de machine commande également les broches dans les plages de vitesse angulaire à contrôler, sans que ces broches ne supportent des outils ou des pièces, et peut commander les broches par le biais d'un sous-programme de commande numérique qui est appelé conjointement avec le mot de données pour le segment de surveillance.

31. Procédé selon la revendication 29 ou 30, **caractérisé en ce que**, pendant l'appel du segment de surveillance respectif permettant de contrôler les broches d'outil ou de pièces pour savoir s'il y a un déséquilibre, les vitesses angulaires sont toujours identiques et les cycles de surveillance respectifs des broches d'outil ou des broches porte-pièce correspondantes sont déclenchés de façon récurrente à des intervalles de temps réguliers par la commande de machine.

32. Procédé selon la revendication 29 ou 31, **caractérisé en ce que** le segment de surveillance permettant de contrôler de façon ciblée les broches d'outil ou les broches porte-pièce peut être prescrit par la commande de machine pratiquement de façon illimitée, souvent pendant toute la durée de vie d'une machine-outil.

33. Procédé selon la revendication 32, **caractérisé en ce que** le laps de temps entre deux segments de surveillance identiques permettant de contrôler de façon ciblée des broches d'outil ou des broches porte-pièce est prescrit par la commande de machine à une valeur de temps égale à la durée attendue d'une modification tout juste perceptible, due à l'usure, des broches d'outil ou des broches porte-pièce.

34. Procédé selon les revendications 29 à 33, **caractérisé en ce que**, dans le cas de nouvelles broches d'outil ou de nouvelles broches porte-pièce respectivement dans le cas de broches d'outil ou de broches porte-pièce parfaites non usées, on met en oeuvre un segment de surveillance par apprentissage pendant lequel les signaux de mesure respectivement les courbes de signal de mesure des capteurs sont mémorisés dans le système de surveillance et les seuils de commutation sont déterminés, par rapport aux signaux respectivement courbes de signal, en ce qui concerne les écarts maximum permis des signaux de capteur pour les segments de surveillance futurs jusqu'à obtenir un déséquilibre indésirable des broches d'outil ou des broches porte-pièce.

35. Procédé selon les revendications 29 à 34, **caractérisé en ce que** les signaux de mesure des capteurs provenant des segments de surveillance identiques successifs peuvent être mémorisés dans le système de surveillance et être lus à tout moment en vue de contrôler les broches d'outil ou les broches porte-pièce.

36. Procédé selon les revendications 29 et 30, **caractérisé en ce que**, notamment lorsque les pièces sont fabriquées en série et en ce qui concerne le contrôle des broches d'outil ou des broches porte-pièce, la commande de machine n'arrête pas le programme de commande numérique normal pour l'usinage de cette pièce, mais transmet en plus au système de surveillance un segment de surveillance spécifique à l'outil permettant de surveiller les outils de perçage ou de fraisage pour voir s'ils présentent un déséquilibre indésirable en accélérant les broches d'outil dotées de l'outil respectif à la vitesse angulaire de consigne respective.

37. Procédé selon la revendication 36, **caractérisé en ce que** le contrôle correspondant des broches d'outil, pour savoir si les outils de perçage ou de fraisage respectifs présentent un déséquilibre indésirable, n'est effectué qu'en contrôlant les valeurs de signal de mesure dans une courte fenêtre temporelle pendant l'accélération des broches et pour cela un court segment de surveillance correspondant est transmis au dispositif de surveillance par la commande de machine et **en ce que** ce segment de surveillance est transmit avantageusement lorsque la vitesse angulaire de consigne est d'environ 50%, pour pouvoir empêcher la poursuite de l'accélération, lorsque les broches d'outil dotées de l'outil de perçage ou de fraisage respectif présentent un déséquilibre indésirable, en déconnectant immédiatement les broches.

38. Procédé selon les revendications 36 et 37, **caractérisé en ce que**, dans le cas de nouvelles broches d'outil ou de nouvelles broches porte-pièce respectivement dans le cas de broches d'outil ou de broches porte-pièce parfaites non usées et dans le cas de pseudo-outils respectifs présentant des déséquilibres définis encore tolérables à la place des outils d'origine dans les broches d'outils, on met en oeuvre exceptionnellement un segment de surveillance par apprentissage pour tous les types d'outil pendant lequel les signaux de mesure des capteurs sont mémorisés dans le système de surveillance et, les seuils de commutation sont déterminés, par rapport aux signaux respectivement courbes de signal, en ce qui concerne les écarts maximum permis des signaux de capteur pour les segments de surveillance futurs jusqu'à obtenir un déséquilibre indésirable au niveau des outils de perçage et de fraisage.

39. Procédé selon la revendication 6, **caractérisé en ce que**, pour surveiller un endommagement ou une usure au niveau d'autres dispositifs de la machine entraînés par moteur, tels qu'une unité hydraulique, une pompe de réfrigérant lubrifiant, un entraînement de la porte de protection etc., appelés unités dans la suite, des signaux de mesure sont détectés par des capteurs de courant ou de puissance au niveau des moteurs d'entraînement ou, pour surveiller des bruits ou des vibrations au niveau des unités, des bruits et des vibrations sont détectés par un ou plusieurs capteurs de bruit de structure et/ou capteurs de vibrations.

40. Procédé selon la revendication 39, **caractérisé en ce que**, au moment où la commande de machine prescrit au système de surveillance le segment de surveillance permettant de contrôler des unités, la commande de machine entraîne respectivement déplace suivant un mouvement alternatif également les unités correspondantes dans des plages de puissance à contrôler, avantageusement dans toutes les plages de puissance, sans effectuer à ce moment de processus d'usinage, et **en ce que** la commande de machine peut exécuter ces mouvements par le biais d'un sous-programme de commande numérique qui est appelé conjointement avec le mot de données pour le segment de surveillance.

41. Procédé selon la revendication 40, **caractérisé en ce que** la commande de machine ne met en oeuvre le segment de surveillance permettant de contrôler des unités que lorsqu'il n'y a aucune pièce dans la machine de sorte que les unités peuvent être entraînées respectivement être déplacées suivant un mouvement alternatif dans toute leur plage de puissance sans risque de collision et sans processus d'usinage.

42. Procédé selon les revendications 40 à 41, **caractérisé en ce que** le segment de surveillance permettant de contrôler de façon ciblée les unités peut être prescrit par la commande de machine pratiquement de façon illimitée, souvent pendant toute la durée de vie d'une machine-outil.

43. Procédé selon la revendication 42, **caractérisé en ce que** le laps de temps entre deux segments de surveillance identiques permettant de contrôler de façon ciblée des unités est prescrit par la commande de machine à une valeur de temps égale à la durée attendue d'une modification tout juste perceptible, due à l'usure, des unités.

44. Procédé selon les revendications 40 à 43, **caractérisé en ce que**, dans le cas de nouvelles unités ou dans le cas d'unités parfaites non usées, on effectue un segment de surveillance par apprentissage pendant lequel les signaux de mesure respectivement les courbes de signal de mesure des capteurs sont mémorisés dans le système de surveillance et les seuils de commutation respectivement les courbes de seuil de commutation sont déterminés, par rapport aux signaux respectivement courbes de signal, en ce qui concerne les écarts maximum permis des signaux de capteur pour les segments de surveillance futurs jusqu'à la fin de la durée de vie des unités d'avancement de la machine-outil.

45. Procédé selon les revendications 40 à 44, **caractérisé en ce que** les signaux de mesure respectivement les courbes de signal de mesure des capteurs provenant des segments de surveillance identiques successifs peuvent être mémorisés dans le système de surveillance et être lus à tout moment en vue de contrôler les unités.
